# EUROPEAN PATENT APPLICATION

(11) **EP 4 467 235 A1**
(43) Date of publication of application: **27.11.2024**
(21) Application number: 23174505.0
(22) Date of filing: 22.05.2023
(51) Int. Cl.: B01J 8/18, B01J 8/44, C08F 2/34, B01J 8/38, B01J 19/24, C08F 10/00

(54) **PROCESS OF STARTING UP A GAS PHASE OLEFIN POLYMERIZATION REACTION**

(71) Applicant: Basell Polyolefine GmbH, 50389 Wesseling (DE)
(72) Inventor: SESSA, Stefano, 44122 Ferrara (IT); MARTURANO, Lorella, 44122 Ferrara (IT); CAPISANI, Paolo, 44122 Ferrara (IT); DI DIEGO, Maria, 44122 Ferrara (IT); BAITA, Pietro, 44122 Ferrara (IT); SCHUELLER, Ulf, 64331 Weiterstadt (DE); NARDIN, Alberto, 44122 Ferrara (IT); MAZZUCCO, Antonio, 44122 Ferrara (IT)
(74) Representative: LyondellBasell

(57) **Abstract**

A process of starting up a gas phase olefin polymerization reaction carried out in the presence of a catalyst in a fluidized bed reactor, the process comprising the steps of: flowing a gas composition, which comprises the olefin, hydrogen and an inert gas, through the fluidized bed reactor; activating the catalyst in at least one pre-contacting pot; feeding the catalyst, after the step of activating, into the fluidized bed reactor; and monitoring the olefin concentration in the gas composition after the step of feeding the catalyst and start feeding olefin into the fluidized bed reactor when the olefin concentration drops and controlling the olefin flow to maintain a concentration olefin in the fluidized bed reactor within a given range.

## Description

### TECHNICAL FIELD

The present disclosure relates to a process of starting up a gas phase olefin polymerization reaction and a method of preparing an olefin polymer.

### BACKGROUND OF THE DISCLOSURE

Gas-phase polymerization methods are economical processes for the polymerization of olefins such as homopolymerizing ethylene or propylene or copolymerizing ethylene or propylene with other olefins. Suitable reactors for carrying out such gas-phase polymerizations are for example fluidized bed reactors, stirred gas-phase reactors or multizone circulating reactors with two distinct interconnected gas-phase polymerization zones. These methods are usually carried out in a gas phase comprising monomers and possibly comonomers and often additionally also other gaseous components such as polymerization diluents, for example nitrogen or alkanes, or hydrogen as molecular weight modifier or low-molecular weight reaction products. The obtained products are generally solid polyolefin particles which are formed by polymerization catalyst systems usually comprising particulate catalyst solids.

Olefin gas-phase polymerization methods usually requires long start-up and/or transition times. This leads to costly wastes of time and material. In this respect, it should be noted that during the start-up of reactors, the material used before the polymer with the correct specifications is produced may be substantially dissipated.

There is accordingly a need to provide a process of starting up a gas phase olefin polymerization reaction, which allows to cut on start-up/transition times, effectively reducing the off spec running time/material.

The object of the present disclosure is to provide a process of starting up a gas phase olefin polymerization reaction and a method of preparing an olefin polymer, that allow the drawbacks of the known art to be at least partially overcome, and which eventually are, at the same time, simple and inexpensive to implement.

### SUMMARY

According to the disclosure there is provided a process of starting up a gas phase olefin polymerization reaction and a method of preparing an olefin polymer according to the appended independent claims and, preferably, according to any one of the claims directly or indirectly depending on the independent claims.

### BRIEF DESCRIPTION OF THE DRAWINGS

The disclosure is hereinafter described with reference to the accompanying drawings, which depict some non-limiting embodiments thereof, wherein:
- figure 1 is schematic and side view of a fluidized bed reactor for implementing the process and the method in accordance with the present disclosure;
- figure 2 is schematic and side view of an arrangement for implementing the process and the method in accordance with the present disclosure and which contains another embodiment of a fluidized bed reactor;
- figure 3 is a front cross-section of a detail of figures 1 and 2;
- figure 4 is a plan view of the part of the fluidized bed reactor of figures 1 and 2 with some details removed for clarity;

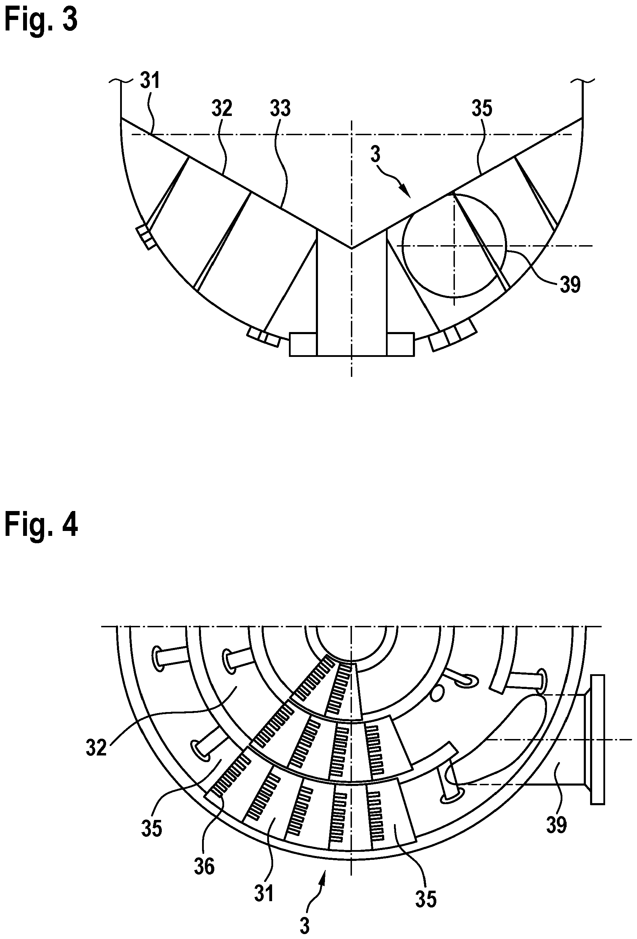

- figure 4 is a front cross-section of a detail of figure 4; and

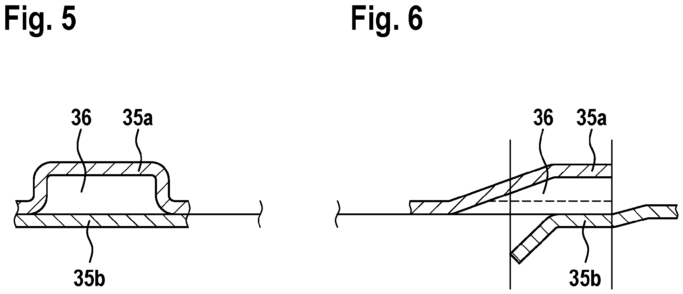

- figure 5 is a lateral cross-section of the detail of figure 4.

### DETAILED DESCRIPTION

In accordance with a first aspect of the present disclosure it is herein provided a process of starting up a gas phase olefin polymerization reaction carried out in the presence of a catalyst in a fluidized bed reactor 1.

Fluidized bed reactors are reactors in which the polymerization takes place in a bed of polyolefin particles which is maintained in a fluidized state by feeding in a reaction gas mixture at the lower end of a reactor, usually below a gas distribution grid having the function of dispensing the gas flow, and taking off the gas again at the top of the fluidized bed reactor. The reaction gas mixture is then returned to the lower end of the reactor via a recycle line equipped with a centrifugal compressor and a heat exchanger for removing the heat of polymerization. The flow rate of the reaction gas mixture has to be sufficiently high firstly to fluidize the bed of finely divided polymer present in the polymerization zone and secondly to remove the heat of polymerization effectively.

Multizone circulating reactors are, for example, described in WO 97/04015 A1 and WO 00/02929 A1 and have two interconnected polymerization zones, a riser, in which the growing polyolefin particles flow upward under fast fluidization or transport conditions and a downcomer, in which the growing polyolefin particles flow downward in a densified form under the action of gravity. The polyolefin particles leaving the riser enter the downcomer and the polyolefin particles leaving the downcomer are reintroduced into the riser, thus establishing a circulation of polymer between the two polymerization zones and the polymer is passed alternately a plurality of times through these two zones. In such polymerization reactors, a solid/gas separator is arranged above the downcomer to separate the polyolefin and reaction gaseous mixture coming from the riser. The growing polyolefin particles enter the downcomer and the separated reaction gas mixture of the riser is continuously recycled through a gas recycle line to one or more points of reintroduction into the polymerization reactor. Preferably, the major part of the recycle gas is recycled to the bottom of the riser. The recycle line is equipped with a centrifugal compressor and a heat exchanger for removing the heat of polymerization. Preferably, a line for feeding catalyst or a line for feeding polyolefin particles coming from an upstream reactor is arranged on the riser and a polymer discharge system is located in the bottom portion of the downcomer. The introduction of make-up monomers, comonomers, hydrogen and/or inert components may occur at various points along the riser and the downcomer.

Olefins which may be polymerized in the gas-phase polymerization reactors of the present disclosure are especially 1-olefins, i.e. hydrocarbons having terminal double bonds, without being restricted thereto. Preference is given to nonpolar olefinic compounds. Particularly preferred 1 -olefins are linear or branched C₂ -C₁₂-1-alkenes, in particular linear C₂ -C₁₀-1-alkenes such as ethylene, propylene, 1-butene, 1-pentene, 1-hexene, 1-heptene, 1-octene, 1-decene or branched C₂ -C₁₀-1-alkenes such as 4-methyl-1 - pentene, conjugated and nonconjugated dienes such as 1,3-butadiene, 1,4-hexadiene or 1,7-octadiene. It is also possible to polymerize mixtures of various 1-olefins. Suitable olefins also include ones in which the double bond is part of a cyclic structure which can have one or more ring systems. Examples are cyclopentene, norbornene, tetracyclododecene or methylnorbomene or dienes such as 5-ethylidene-2-norbomene, norbornadiene or ethylnorbomadiene. It is also possible to polymerize mixtures of two or more olefins.

The gas-phase polymerization reactors are in particular suitable for the homopolymerization or copolymerization of ethylene and/or propylene and is especially preferred for the homopolymerization or copolymerization of ethylene. Preferred comonomers in propylene polymerization are up to 40 wt.% of ethylene, 1-butene and/or 1-hexene, preferably from 0.5 wt.% to 35 wt.% of ethylene, 1-butene and/or 1-hexene with respect to the total weight of the propylene copolymer, i.e. sum of all monomers and comonomers. As comonomers in ethylene polymerization, preference is given to using up to 20 wt.%, more preferably from 0.01 wt.% to 15 wt.% and especially from 0.05 wt.% to 12 wt.% of C₃-C₈-1-alkenes, in particular 1-butene, 1-pentene, 1-hexene and/or 1-octene with respect to the total weight of the ethylene copolymer. Particular preference is given to polymerizations in which ethylene is copolymerized with from 0.1 wt.% to 12 wt.% of 1-hexene and/or 1-butene.

In this text, unless otherwise specified, "Cₓ-C_{y}" refers to a group and/or a compound which is intended having x to y carbon atoms.

The process comprises the steps of:
flowing a gas composition, which comprises (in particular, consists of) the olefin, hydrogen and an inert gas, through the fluidized bed reactor 1, which has a content of solid polymer particles lower than 1 % of the maximum capacity of the fluidized bed reactor 1.
activating the catalyst in at least one pre-contacting pot;
feeding the catalyst, after the step of activating, into the fluidized bed reactor 1; and
monitoring the olefin concentration in the gas composition after the step of feeding the catalyst and start feeding olefin into the fluidized bed reactor 1 when the olefin concentration drops and controlling the olefin flow to maintain a concentration olefin in the fluidized bed reactor 1 within a given range (in particular, 4% to 25%; more in particular, 6% to 15% molar with respect to the gas content of the fluidized bed reactor).

The start-up of the polymerization may preferably be implemented on an empty fluidized bed reactor. "Empty" in this context means that the content of solid polymers is lower than 1% of the maximum capacity, preferably lower than 0.5 % of the maximum capacity.

In this text, unless otherwise specified, the maximum capacity refers to the volume of the substantially cylindrical part of the fluidized bed reactor 1, wherein the height of the cylindrical part is measured from the uppermost part of the distribution grid.

The actual weight of the fluidized bed is measured via pressure load on a pressure transmitter, e.g. via a DP cell. The hold-up in place of capacity may be used. In some embodiments, the fluidized bed may reach the maximum capacity. For the measurement at least two pressure transmitters are provided, wherein one pressure transmitter is mounted at about the height of the fluidization grid. The second of the at least two pressure transmitters may be mounted at a maximum height of the fluidized bed reactor, thus being able to detect the pressure difference between the upper and lower part. This measurement can be correlated to the weight of the fluidized bed. Preferably, intermediate pressure transmitters may be mounted at intervals between the first and second pressure transmitter.

According to some non-limiting embodiments, the molar concentration of olefin in the fluidized bed reactor 1 is measured by means of on line Gas Chromatography (GC). A sample of the gas mixture can be for example channelled off from the recycle line between the compressor and the heat exchanger. Preferably, the sample is passed through a filter in order to gain a clean sample without any entrained particles.

In some embodiments, the step of feeding the catalyst is carried out (at least partially) during the step of flowing.

In this way the catalyst may start to work immediately after getting to the reactor.

In particular, during the step of flowing (and, in particular, of feeding), the fluidized bed reactor 1 reaches (has) a predetermined inside temperature; more in particular, such an inside temperature is of 20 to 200°C.

Alternatively or additionally, during the step of flowing (and, in particular, of feeding), the fluidized bed reactor 1 reaches (has) a predetermined inside pressure; more in particular, such an inside pressure is of 0.5 to 100 MPa.

Alternatively or additionally, during the step of flowing (and, in particular, of feeding), the gas composition flows through the fluidized bed reactor 1 at a predetermined superficial gas velocity; more in particular, such a superficial gas velocity is of 0.1 to 1 m/sec.

Please note that the superficial gas velocity is the gas velocity at the cylindrical part (i.e. the part of the reactor 1 between the grid 3 and the velocity reduction zone 4 - below the structure of the reactor 1 is described in more detail) of the fluidized bed reactor 1. The superficial gas velocity can be measured by means of a flow transmitter located on the fluidization circuit (i.e. recycle line 5, see below). Preferably, the flow transmitter is located on the recycle line between the compressor and the heat exchanger.

In some embodiments, during the step of activating, the catalyst is inside the (at least one) pre-contacting pot P together with an alkyl composition (alkyl stream).

According to some non-limiting embodiments, an alkyl stream (the alkyl composition) flows through the (at least one) pre-contacting pot P and possibly the fluidized bed reactor 1 (for a predetermined time) before introducing the catalyst feed into the at least one pre-contacting pot P. In particular, the alkyl stream consists of the alkyl composition.

In this way, the risk that unwanted substances (e.g. moisture) get in touch with the catalyst (and thus the catalyst is damaged and/or unwanted reactions take place) are reduced.

More precisely but not necessarily, the alkyl stream (the alkyl composition) flows through the (at least one) pre-contacting pot P and the fluidized bed reactor for at least 20 (in particular, at least 40) min. In particular, to 150 (in particular, to 90) min. before introducing the catalyst feed into the at least one pre-contacting pot P.

In specific and non-limiting cases, the alkyl stream (alkyl composition) mainly consists of one or more organometallic compounds. Preferred organometallic compounds comprise lithium alkyls, magnesium or zinc alkyls, magnesium alkyl halides, aluminum alkyls, silicon alkyls, silicon alkoxides and silicon alkyl halides. More preferably, the organometallic compounds comprise aluminum alkyls and magnesium alkyls. Still more preferably, the organometallic compounds comprise aluminum alkyls, most preferably trialkylaluminum compounds or compounds of this type in which an alkyl group is replaced by a halogen atom, for example by chlorine or bromine. Examples of such aluminum alkyls are trimethylaluminum, triethylaluminum, tri-isobutylaluminum, tri-n-hexylaluminum or diethylaluminum chloride or mixtures thereof.

In the Examples provided TIBA and DEAC (not any other compound) were fed to the pre-contacting pot at a ratio of 7:1 based on weight. The ratio of TIBA + DEAC to catalyst is from 3.5:1 to 6.5:1, preferably 5:1.

In some embodiments, during the step of activating, the catalyst has a residence time in the (at least one) pre-contacting pot P between 10 (in particular, 20) to 100 min (in particular, up to 60 min).

In some non-limiting cases, at least two pre-contacting pots P and PP are provided and are arranged in a series upstream the fluidized bed reactor 1. In particular, in these cases, what is said in this disclosure with reference to the pre-contacting pot P also applies to the pre-contacting pot PP. For example, the presence and/or the feeding of the alkyl stream (the alkyl composition) specified above with respect to the pre-contacting pot P also applies to the pre-contacting pot PP.

In some embodiments, during the step of feeding, the catalyst is fed to the fluidized bed reactor 1 together with the above mentioned alkyl feed (alkyl composition).

According to some non-limiting embodiments, after the catalyst is fed to the at least one pre-contacting pot P for a predetermined time, an antistatic agent feed is introduced to the fluidized bed reactor 1. In particular, such a predetermined time is up to 60 min (more in particular, up to 40 minutes). In particular, such a predetermined time is at least 5 min (more in particular, at least 15 min).

In some embodiments, the antistatic agent feed is increased when a level of polyolefin particles in the fluidized bed reactor 1 starts to increase.

A bed level of polyolefin particles may be measured by means of a DP cell transmitter, as described above.

According to some non-limiting embodiments, the antistatic agent is introduced in the fluidized bed reactor 1 through one or more inlets (not depicted in the enclosed figures); the inert gas is fed through the inlets before the antistatic agent.

In this way, a reduction of risks that contaminants are present inside the reactor 1, when the reactions start, is obtained.

Optionally, the fluidized bed reactor comprises at least two inlets for the antistatic agent, one antistatic inlet being arranged proximate to a catalyst inlet 12 and one antistatic inlet being arranged distal to the catalyst inlet 12.

According to some non-limiting embodiments, the two inlets for the antistatic agent are opposite to each other (i.e. at 180° from each other with respect to a longitudinal axis of the fluidized bed reactor 1).

More precisely but not necessarily, the two inlets for the antistatic agent are located at a few centimetres (in particular, at least 4 centimetres) above the uppermost part of the distribution grid 3.

According to some non-limiting embodiments, the antistatic agent is fed only through the antistatic inlet distal to the catalyst inlet 12 after the above mentioned predetermined time. More precisely but not necessarily, the antistatic agent is also fed through the antistatic inlet proximate to the catalyst inlet 12 after a predetermined bed weight is reached in the fluidized bed reactor.

The bed weight may be measured by means of pressure load on a pressure transmitter (DP cell).

Preferably, the antistatic agent comprises an alkoxyamine (such as for example commercially available Atmer^{™}, for example Atmer163^{™}) and/or a surfactant (for example PEK, supplied by Clariant).

In some embodiments, the pressure (inside the reactor 1) is gradually increased (to a predetermined set point - in particular between 0.5 and 10 MPa) after feeding the catalyst into the reactor 1 (after the predetermined bed weight is reached).

In some embodiments, the olefin makes up between 2 to 20 mol-% of the above mentioned gas composition.

Additionally or alternatively, the hydrogen makes up between 2 to 20 mol-% of the gas composition.

According to some non-limiting embodiments, the inert gas is nitrogen or an alkane having from 1 to 10 carbon atoms such as methane, ethane, propane, n-butane, isobutane, n-pentane, isopentane or n-hexane or mixtures thereof. The use of nitrogen or propane as inert gas, if appropriate in combination with further alkanes, is preferred. In especially preferred embodiments of the present disclosure, the inert gas is a C₃-C₅ alkane and most preferably propane, especially in the case of homopolymerization or copolymerization of ethylene.

In accordance with a second aspect of the present disclosure, there is also provided a method of preparing an olefin polymer comprising homopolymerizing an olefin or copolymerizing the olefin together with one or more other olefins at temperatures of from 20 to 200°C and pressures of from 0.5 to 10 MPa in the presence of a polymerization catalyst, wherein the method comprises a start up phase, which is according to the process of the first aspect of the present disclosure. In particular, the method is at least partly carried out in the fluidized bed reactor 1.

According to some non-limiting embodiments the polymerization is a homopolymerization of ethylene or a copolymerization of ethylene and one or more other olefins selected from the group consisting of 1-butene, 1-hexene and 1-octene.

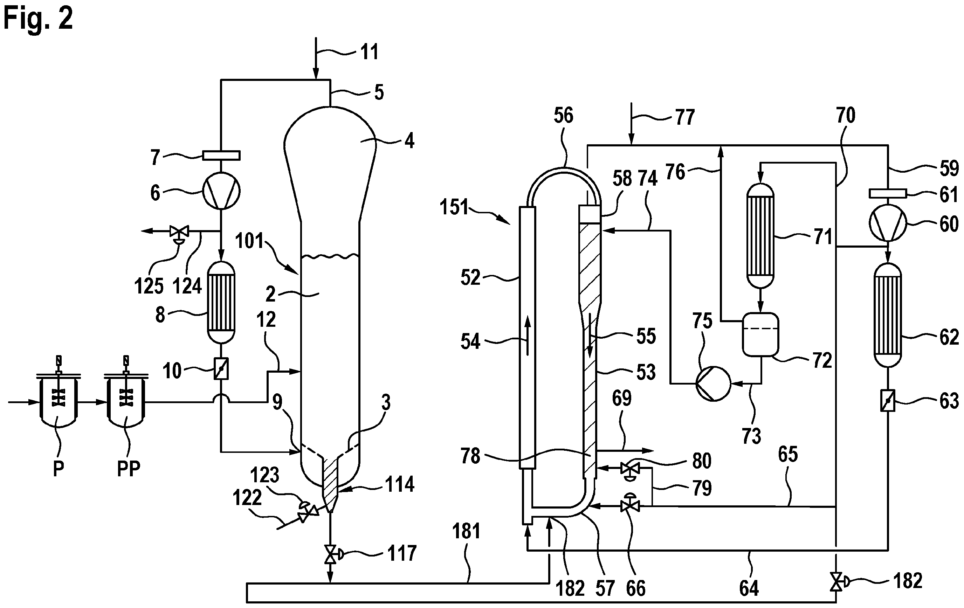

Making particular reference to figure 2, In some embodiments, a series of reactors 101 and 151 is provided, the series of reactors 101 and 151 comprising (in particular consisting of) the fluidized bed reactor 101 and a multizone circulating reactor 151 arranged downstream of the fluidized bed reactor 101.

Alternatively (not shown), the series of reactors comprises (in particular, consists of) two fluidized bed reactors 1 (and 101), one downstream of the other.

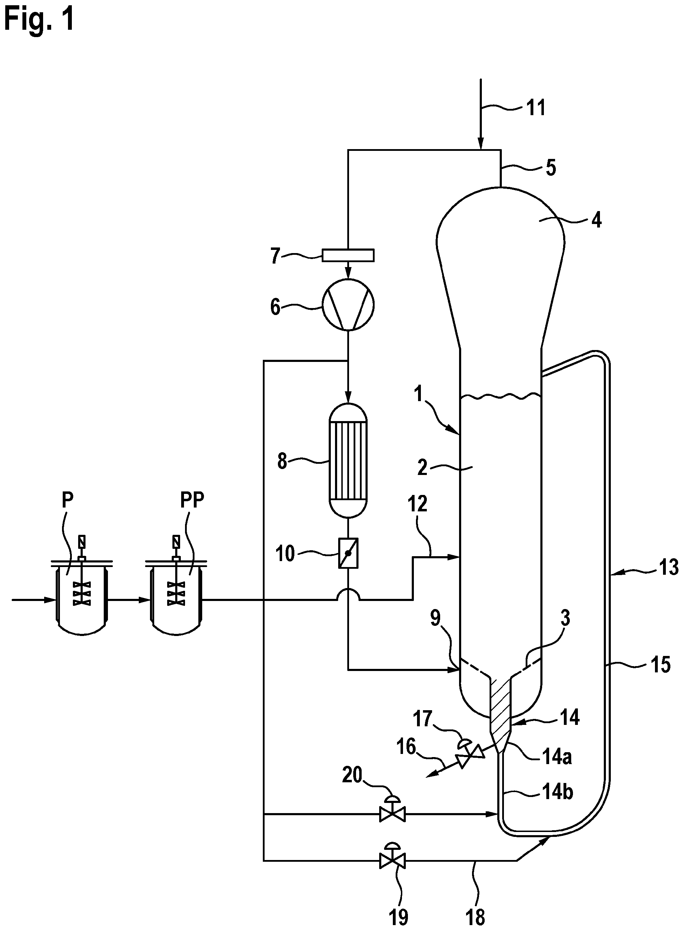

In some non-limiting instances, the method is carried in just one fluidized bed reactor 1 (figure 1).

According to some non-limiting embodiments, the resulting polyolefin is a high density polyethylene having a density determined according to ISO 1183 at 23°C from 0.945 to 0.970 g/cm³ or a low density polyethylene having a density determined according to ISO 1183 at 23°C from 0.915 to 0.944 g/cm³.

Figure 1 shows schematically a non-limiting embodiment of a fluidized bed reactor 1 and of the two pre-contacting pots P and PP for carrying out the process (and method) of the present disclosure.

The fluidized bed reactor 1 according to the depicted embodiment comprises a fluidized bed 2 of polyolefin particles, a gas distribution grid 3 and a velocity reduction zone 4. The velocity reduction zone 4 is generally of increased diameter compared to the diameter of the fluidized-bed portion of the reactor. The polyolefin bed is kept in a fluidization state by an upwardly flow of gas fed through the gas distribution grid 3 placed at the bottom portion of the reactor 1. The gaseous stream of the reaction gas leaving the top of the velocity reduction zone 4 via recycle line 5 is compressed by centrifugal compressor 6 comprising variable guide vanes 7, transferred to a heat exchanger 8, in which it is cooled, and then recycled to the bottom of the fluidized bed reactor 1 at a point below the gas distribution grid 3 at position 9. The recycle line 5 further comprises, downstream of heat exchanger 8, a butterfly valve 10. Make-up monomers, molecular weight regulators, and optional inert gases can be fed into the reactor 1 at various positions, for example via line 11 upstream of the compressor 6. Generally, the catalyst is fed into the reactor 1 via an inlet (a line) 12 that is preferably placed in the lower part of the fluidized bed 2.

The fluidized bed reactor 1 is provided with a continuous pneumatic recycle of polyolefin particles by means of a circulation loop 13 connecting the gas distribution grid 3 to the upper region of the fluidized bed reactor 1. The circulation loop 13 comprises a settling pipe 14 which is integrated with its upper opening into the gas distribution grid 3 and is preferably arranged substantially vertical. The settling pipe 14 has a section of higher diameter 14a and a section of lower diameter 14b. The gas distribution grid 3 is endowed with a cone shape in such a way that its downward inclination towards the settling pipe 14 fosters the entry of the polyolefin particles into the settling pipe 14 due to gravity. The upper opening of the settling pipe 14 is preferably located in a central position with respect to the gas distribution grid 3. The lower part of the settling pipe 14 is connected to a pneumatic conveyor pipe 15, which has the function of reintroducing the polyolefin particles into the fluidized bed reactor 1. The outlet of the pneumatic conveyor pipe 15 is preferably placed above the polymer bed 2 and below the velocity reduction zone 4.

The discharge of polyolefin particles from the fluidized bed reactor 1 occurs through discharge conduit 16 which is attached to the settling pipe section of higher diameter 14a. A control valve 17 is installed in discharge conduit 16 in proximity of settling pipe 14 for adjusting the flow rate of the polyolefin particles discharged from the fluidized bed reactor 1 into the discharge conduit 16. The discharge of the polyolefin particles is carried out in continuous and the opening of the control valve 17 is adjusted so as to keep constant the level of polyolefin particles inside the fluidized bed reactor 1.

The control valve 17 is preferably placed in the area of a restriction in the settling pipe 14 existing between the section of higher diameter 14a and the section of lower diameter 14b.

The polyolefin particles not discharged through the discharge conduit 16 are recycled to the upper region of the fluidized bed reactor 1 by the circulation loop 13.

The carrier gas for transporting the polyolefin particles through the pneumatic conveyor pipe 15 is taken from the gas recycle line at a point downstream the compressor 6 and upstream the heat exchanger 8, thus exploiting the pressure drop existing through the heat exchanger 8, butterfly valve 10, the distribution grid 3 and the polymer bed 2. The carrier gas is predominantly fed via line 18 at the inlet of the conveyor pipe 15. The regulation of the flow rate of the polyolefin particles recycled through the circulation loop 13 is carried out by means of the control valves 19 and 20, adjusting the flow rate of the carrier gas entering the conveyor pipe 15.

In some embodiments, the fluidized bed reactor 1 comprises the gas distribution grid 3 (in particular, installed in a lower part of the fluidized bed reactor 1).

In some embodiments, the gas distribution grid 3 redirects the gas feed into a circumferential direction around a longitudinal axis of the fluidized bed reactor.

According to the embodiments depicted in figures 3-6, the gas distributor grid 3 comprises three annular modules 31, 32, 33 of trays 35 connected to each other to form the lateral walls of a truncated cone. The annular modules 31, 32, 33 consist of trays 35 in form of plates mounted on annular supports in a way that each tray is connected with two adjacent trays. The annular modules are held supported by means of bars 30 protruding from the bottom wall of the reactor 1 below the gas distribution grid 3.

The grid 3 is provided with slots 36.

In some embodiments, the number of slots 36 increases from the inner to the peripheral annular module in a way that the number of slots per area is kept essentially constant over the grid.

In particular, the slots 36 are formed so as to give a gas outlet, which is tangential at the plane of two adjacent trays 35. In this way the slots 36 are able to generate a whirling, cyclonic motion of the gas stream above the gas distribution grid 3 mounted at the bottom of a fluidized bed reactor 1.

More precisely but not necessarily, in use, the gas composition enters through a conduit 39 just below the distribution grid 3 and its direction of inlet is such to cause a "centrifugal effect" in the zone underlying the distribution grid 3. Moreover, the flow of gas entering through the conduit 39 has the same orientation of the slots 36 on the distribution grid 3, so as to favor the channeling of the gas into the slots 36.

Figure 5 shows a radial section of a single slot 36, i.e. a section which is perpendicular to the direction of the gas flow passing through the slot 36.

According to non-limiting embodiments, the slot 36 is formed by the overlapping of two adjacent trays 35a and 35b. Each tray forms on a side the lower part of the slots and on the opposite side the upper part of the slots. This arrangement is essentially identical for all trays in the gas distributor. In detail, the upper end of the slot 36 is formed by a first tray 35a, the lower end of the slot 36 is formed by a second tray 35b fixed to the first tray 35a. The first tray 35a is deformed in a way to form slots 16 having an essentially rectangular cross section. The first tray 35a defines the top and the sides of the rectangular slot 36, while the second tray 35b defines the bottom side of the rectangular slot 36. The width of the slots 36 in this embodiment is more than the double of its height.

Figure 6 shows a tangential section of the slot 36, i.e. a section which is oriented along the direction of the gas flow passing through the slot 36. Likewise, it can be seen that the upper part of the slot 36 is formed by one tray 35a, the lower part being formed by a successive tray 35b.

In particular, the slots 36 essentially consist of three portions along the flow direction: an inlet portion, a central portion and an outlet portion. In the central portion the trays 35a and 35b are substantially parallel, the length of said central portion being higher than its height and its inclination with respect to the plane of the trays being essentially zero. The inlet portion has a narrowing height along the flow direction, while the outlet portion is slightly ascending and is formed only by the lower tray 35b. The axes of said slots 16 is tangential with respect to the plane of said trays 35a, 35b.

Figure 2 shows schematically and as an example a cascade of two serially connected gas-phase reactors 101 and 151 and two pre-contacting pots P and PP for carrying out the process (and method) of the present disclosure.

The fluidized bed reactor 101 shown in Figure 2 is similar to the fluidized bed reactor 1 shown in Figure 1.

The multizone circulating reactor 151 comprises as first reaction zone a riser 52 and as second reaction zone a downcomer 53 which are repeatedly passed by the polyolefin particles. Within riser 52, the polyolefin particles flow upward under fast fluidization conditions along the direction of arrow 54. Within the downcomer 53, the polyolefin particles flow downward under the action of gravity along the direction of the arrow 55. The riser 52 and the downcomer 53 are appropriately interconnected by the interconnection bends 56 and 57.

After flowing through the riser 52, the polyolefin particles and the reaction gas mixture leave riser 52 and are conveyed to a solid/gas separation zone 58. This solid/gas separation can be effected by using conventional separation means such as, for example, a centrifugal separator like a cyclone. From the separation zone 58 the polyolefin particles enter downcomer 53.

The reaction gas mixture leaving the separation zone 58 is recycled to the riser 52 by means of a recycle line 59, equipped with a centrifugal compressor 60 comprising variable guide vanes 61 and a heat exchanger 62. The recycle line 59 further comprises, downstream of heat exchanger 62, a butterfly valve 63. Between the compressor 60 and the heat exchanger 62, the recycle line 59 splits and the gaseous mixture is divided into two separated streams: line 64 conveys a part of the recycle gas through the heat exchanger (62) and the butterfly valve 63 to the bottom of riser 52, so as to establish fast fluidization conditions therein, while line 65 conveys another part of the recycle gas into the interconnection bend 57. For controlling the flow rate of the transport gas through line 65 into the interconnection bend 57, line 65 is equipped with a control valve 66.

The polyolefin particles obtained in the multizone circulating reactor 51 are continuously discharged from the bottom part of the downcomer 53 via the discharge line 69.

A part of the gaseous mixture leaving the separation zone 58 exits the recycle line 59 after having passed the compressor 60 and is sent through line 70 to the heat exchanger 71, where it is cooled to a temperature at which the monomers and the optional inert gas are partially condensed. A separating vessel 72 is placed downstream of the heat exchanger 71. The separated liquid is withdrawn from the separating vessel 72 via line 73 and fed to down comer 53 through line 74 by means of a pump 75 to generate the barrier for preventing the reaction gas mixture of the riser 52 from entering the downcomer 53. The gaseous mixture obtained as gas-phase in the separating vessel 72 is recirculated to recycle line 59 through line 76. Make-up monomers, make-up comonomers, and optionally inert gases and/or process additives can be introduced into the recycle line 59 via line 77.

The bottom of the downcomer 53 is equipped with a butterfly valve 78 having an adjustable opening for adjusting the flow of polyolefin particles from downcomer 53 through inter connection bend 57 into the riser 52. Above the butterfly valve 78) amounts of a recycle gas mixture coming from the recycle line 59 through line 79 are introduced as dosing gas into the downcomer 53 to facilitate the flow of the polyolefin particles through butterfly valve 78. For controlling the flow rate of the dosing gas, line 79 is equipped with a control valve 80.

The fluidized bed reactor 101 differs from the fluidized bed reactor 1 in that the fluidized bed reactor 101 does not comprise a circulation loop 13. Instead, the settling pipe 114 is closed at the lower end by a discharge valve 117, which is preferably a segmental ball valve.

The bed of polyolefin particles contained in the settling pipe 114 during operation of fluidized- bed reactor 101 enters the settling pipe 114 at the upper opening which is integrated into the gas distribution grid 3 and moves from top to bottom of the settling pipe. Discharge valve 117 is arranged above a line 181 which branches off the line 65 of the multizone circulating reactor 151 and carries a part of the recycle gas of multizone circulating reactor 151. For controlling the flow rate of pick-up gas (recycle gas of the reactor 151 by means of which the polyolefin particles are transported) through line 181, line 181 is equipped with a control valve 182. The polyolefin particles having passed discharge valve 117 enter the line 181 and are transported by the pick-up gas to the multizone circulating reactor 151, in which the polyolefin particles enter at a position near valve 182.

The settling pipe 114 is further equipped with a line 121, preferably at a position near the lower end of the settling pipe 114, for introducing a fluid that induces an upward stream of the fluid in the bed of polyolefin particles within the settling pipe 114. In that way, it is prevented that the reaction gas mixture of the fluidized bed reactor 101 enters the line 181 and so multizone circulating reactor 151. The flow of the fluid in line 122 is controlled by a control valve 123. To compensate for the part of the fluid introduced into settling pipe 114 through line 122 which enters the fluidized bed reactor 101 through settling pipe 114, a portion of the reaction gas within fluidized bed reactor 101 has to be withdrawn. This occurs through withdrawal line 124, which branches off recycle line 5 between the centrifugal compressor 6 and the heat ex changer 8. The gas flow through withdrawal line 124 is controlled by a control valve 125. The reaction gas withdrawn through line 124 is preferably transferred to a work-up section (not shown in figure 2).

Unless expressly indicated to the contrary, the content of the references (articles, books, patent applications etc.) cited in this text is recalled in full herein. In particular, the above-mentioned references are incorporated herein by reference.

Further characteristics of the present disclosure will be apparent from the following description of non-limiting examples provided purely for illustrative purposes.

### EXAMPLES

### Example 1 - HDPE Start-up

A fluidized bed reactor (FBR - Fig.1) was started-up without using a polymer bed (seed resin) for the production of HDPE grade (MIE 2.19 kg at 190°C 8-10 g/10').

The reactor was pre-emptively brought at pressure of 3 MPa, with the following gas composition:

**Table 1**

| | Hydrogen | Ethylene | Propane |
|---|---|---|---|
| % molar | 6-8 | 6-8 | Rest (84-88) |

Reactor temperature was kept at 85°C. The superficial gas velocity, calculated as the gas velocity at the cylindrical part (detail 2 of Fig.1) of the fluidized bed reactor (FBR) was kept at 0.4-0.7 m/s.

Said cylindrical part, also referred as polymerization area, has a diameter of 5.2 meters and a height of 21 meters.

For carrying out the polymerization, 5.5 kg/h of a solid Ziegler-Natta type catalyst were fed using 200 kg/h of liquid propane to a first stirred precontacting vessel, into which also a mixture of triisobuthyllaluminum (TIBA) and diethylaluminumchloride (DEAC) were dosed. The weight ratio between triisobutylaluminum and diethylaluminumchloride was 7: 1. The ratio between aluminum alkyl to the solid catalyst was 5:1. The first precontacting vessel was kept at 50°C with an average residence time of 35 minutes. The catalyst suspension of the first precontacting vessel was continuously transferred to a second stirred precontacting vessel, which was operated with an average residence time of 35 minutes and kept also at 50°C. Before feeding the catalyst to the first precontacting vessel, the mixture of triisobuthyllaluminum (TIBA) and diethylaluminumchloride (DEAC) was dosed for one hour. The catalyst suspension was then fed to the precontacting vessels and transferred continuously to fluidized bed reactor (FBR).

After 30 minutes from the catalyst feed to the precontacting vessels, an antistatic agent was fed to the fluidized bed reactor (FBR).

In fluidized bed reactor, ethylene was polymerized in the presence of propane as inert diluent using hydrogen as molecular weight regulator. Ethylene was fed in such a way its molar percent in the fluidized bed reactor (FBR) did not exceed 10% and no lower than 6%. Hydrogen was fed accordingly, in order to maintain a Hydrogen/Ethylene molar ratio of 0.7-1.1. No comonomer was added. The polymerization was carried out at a temperature of 85°C and a pressure of 3.0 MPa.

The fluidized bed reactor (FBR) polymer level was gradually increased up to a measured hold-up of about 60-70 tons.

The superficial gas velocity, measured at the cylindrical part of the fluidized bed reactor (FBR) was kept at 0.4-0.7 m/s. The polyethylene obtained in fluidized bed reactor had a MIE of 8 g/10 min and a density of 0.965 g/cm³.

The polyethylene obtained in fluidized bed reactor (FBR) was continuously transferred to a medium pressure filter, operating at 1.9 MPa, which continuously discharges to a finishing section.

### Example 2 - HDPE Start-up

A fluidized bed reactor (FBR - Fig.1) was started-up without using a polymer bed (seed resin) for the production of HDPE grade (MIE 2.19 kg at 190°C 8-10 g/10').

The reactor was pre-emptively brought at pressure of 3 MPa, with the following gas composition:

**Table 2**

| | Hydrogen | Ethylene | Propane |
|---|---|---|---|
| % molar | 6-8 | 6-8 | Rest |

Reactor temperature was kept at 85°C. The superficial gas velocity, calculated as the gas velocity at the cylindrical part (detail 2 of Fig.1) of the fluidized bed reactor (FBR) was kept at 0.3-0.5 m/s.

Said cylindrical part, also referred as polymerization area, has a diameter of 0.8 meters and a height of 3.65 meters.

For carrying out the polymerization, 30 g/h of a solid Ziegler-Natta type catalyst were fed using 30 kg/h of liquid propane to a first stirred precontacting vessel, into which also a mixture of triisobuthyllaluminum (TIBA) and diethylaluminumchloride (DEAC) were dosed. The weight ratio between triisobutylaluminum and diethylaluminumchloride was 7:1. The ratio between aluminum alkyl to the solid catalyst was 5:1. The first precontacting vessel was kept at 50°C with an average residence time of 40 minutes. The catalyst suspension of the first precontacting vessel was continuously transferred to a second stirred precontacting vessel, which was operated with an average residence time of 40 minutes and kept also at 50°C. Before feeding the catalyst to the first precontacting vessel, the mixture of triisobuthyllaluminum (TIBA) and diethylaluminumchloride (DEAC) was dosed for one hour. The catalyst suspension was then fed to the precontacting vessels and transferred continuously to fluidized bed reactor (FBR).

After 30 minutes from the catalyst feed to the precontacting vessels, an antistatic agent was fed to the fluidized bed reactor (FBR).

In fluidized bed reactor, ethylene was polymerized in the presence of propane as inert diluent using hydrogen as molecular weight regulator. Ethylene was fed in such a way its molar percent in the fluidized bed reactor (FBR) never exceeded 10% and no lower than 4%. Hydrogen was fed accordingly, in order to maintain a Hydrogen/Ethylene molar ratio of 0.7-1.1. No comonomer was added. The polymerization was carried out at a temperature of 85°C and a pressure of 3.0 MPa.

The fluidized bed reactor (FBR) polymer level was gradually increased up to a measured hold-up of about 300 kg.

The superficial gas velocity, measured at the cylindrical part of the fluidized bed reactor (FBR) was kept at 0.3-0.5 m/s. The polyethylene obtained in fluidized bed reactor had a MIE of 8 g/10 min and a density of 0.965 g/cm³.

The polyethylene obtained in fluidized bed reactor was continuously transferred to a medium pressure filter, operating at 1.9 MPa, which continuously discharges to a finishing section.

### Example 3 - LLDPE Start-up

A fluidized bed reactor (FBR - Fig.1) was started-up without using a polymer bed (seed resin) for the production of LLDPE grade (MIE 2.19 kg at 190°C 2 g/10').

The reactor was pre-emptively brought at pressure of 2.2 MPa, with the following gas composition:

**Table 3**

| | Hydrogen/Ethylene | Ethylene | Comonomer/(Comonomer + Ethylene) | Propane |
|---|---|---|---|---|
| % molar | 0.3 - 0.4 | 14 - 18% | 0.1-0.12 (1-Hexene) | Rest |

Reactor temperature was kept at 86°C. The superficial gas velocity, calculated as the gas velocity at the cylindrical part (detail 2 of Fig. 1) of the fluidized bed reactor (FBR) was kept at 0.3-0.5 m/s.

Said cylindrical part, also referred as polymerization area, has a diameter of 0.8 meters and a height of 3.65 meters.

For carrying out the polymerization, 18 g/h of a solid Ziegler-Natta type catalyst were fed using 30 kg/h of liquid propane to a first stirred precontacting vessel, into which also trihexylaluminium (THA) was dosed. The weight ratio between trihexylaluminium (THA) and catalyst was 0.33. The first precontacting vessel was kept at 40°C with an average residence time of 150 minutes. The catalyst suspension of the first precontacting vessel was continuously transferred to a second stirred precontacting vessel, into which also diethylaluminumchloride (DEAC) and triethylaluminium (TEAL) were dosed. The weight ratio diethylaluminumchloride (DEAC) to catalyst was 0.25, while the ratio of triethylaluminium (THA) to catalyst was 0.2. The second precontacting vessel was operated with an average residence time of 47 minutes and kept also at 40°C. Before feeding the catalyst to the first precontacting vessel, trihexylaluminium (THA) and the mixture of diethylaluminumchloride (DEAC) and triethylaluminium were dosed for one hour. The catalyst suspension was then fed to the precontacting vessels and transferred continuously to fluidized bed reactor (FBR).

No antistatic agent was fed to the fluidized bed reactor (FBR).

In fluidized bed reactor, ethylene was polymerized in the presence of propane as inert diluent using hydrogen as molecular weight regulator. Ethylene was fed in such a way its molar percent in the fluidized bed reactor (FBR) never exceeded 20% and no lower than 12%. Hydrogen was fed accordingly, in order to maintain a Hydrogen/Ethylene molar ratio of 0.3-0.4. As comonomer, 1-Hexene as used. The polymerization was carried out at a temperature of 86°C and a pressure of 2.2 MPa.

The fluidized bed reactor (FBR) polymer level was gradually increased up to a measured hold-up of about 250 kg.

The superficial gas velocity, measured at the cylindrical part of the fluidized bed reactor (FBR) was kept at 0.3-0.5 m/s. The polyethylene obtained in fluidized bed reactor had a MIE of 2 g/10 min and a density of 0.918 g/cm³.

Examples 1 to 3 show that the start up process of the present disclosure is fast a relatively easy to implement.

With respect to known processes the present disclosure is less expensive (less hardware needed to stock and handle the seed resin - silo plus pneumatic conveying system) and fast, as it is possible to save the time needed to move the seed resin from the silo to the reactor.

## Claims

1. A process of starting up a gas phase olefin polymerization reaction carried out in the presence of a catalyst in a fluidized bed reactor (1; 101), the process comprising the steps of:
- flowing a gas composition, which comprises the olefin, hydrogen and an inert gas, through the fluidized bed reactor (1; 101), which has a content of solid polymer particles lower than 1% of the maximum capacity of the fluidized bed reactor (1; 101);
- activating the catalyst in at least one pre-contacting pot (P; PP);
- feeding the catalyst, after the step of activating, into the fluidized bed reactor (1; 101); and
- monitoring the olefin concentration in the gas composition after the step of feeding the catalyst and start feeding olefin into the fluidized bed reactor (1; 101) when the olefin concentration drops and controlling the olefin flow to maintain a olefin concentration in the fluidized bed reactor (1; 101) within a given range;
the step of feeding the catalyst is at least partially carried out during the step of flowing.

2. The process of claim 1, wherein, during the step of flowing, the fluidized bed reactor (1; 101) has an inside temperature of 20 to 200°C and an inside pressure of 0.5 to 100 MPa and the gas composition flows through the fluidized bed reactor (1; 101) at a superficial gas velocity of 0.1 to 1 m/sec.

3. The process of claim 1 or 2, wherein the fluidized bed reactor (1; 101) comprises a gas distribution grid (3) installed in a lower part of the fluidized bed reactor (1; 101), and wherein the gas distribution grid (3) redirects the gas feed into a circumferential direction around a longitudinal axis of the fluidized bed reactor (1; 101).

4. The process of any one of claims 1 to 3, wherein an alkyl stream flows through the at least one pre-contacting pot (P; PP) and the fluidized bed reactor (1; 101) before introducing the catalyst feed into the at least one pre-contacting pot (P; PP); in particular, the alkyl stream mainly consists of one or more alkyl aluminum compounds; in particular, during the step of activating, the catalyst is inside the at least one pre-contacting pot (P; PP) together with said alkyl.

5. The process of any one of claims 1 to 4, wherein, during the step of activating, the catalyst has a residence time in the at least one pre-contacting pot (P; PP) between 10 to 100 min.

6. The process of any one of claims 1 to 5, wherein at least two pre-contacting pots (P, PP) are provided and are arranged in a series upstream the fluidized bed reactor (1; 101).

7. The process of any one of claims 1 to 6, wherein, after the catalyst is fed to the at least one pre-contacting pot (P; P) for a predetermined time, an antistatic agent is introduced to the fluidized bed reactor (1; 101).

8. The process of claim 7, wherein the fluidized bed reactor (1; 101) comprises at least two inlets for the antistatic agent, one antistatic inlet being arranged proximate to a catalyst inlet (12) and one antistatic inlet being arranged distal to the catalyst inlet (12); the antistatic agent being only fed through the antistatic inlet distal to the catalyst inlet (12) after said predetermined time; in particular, the antistatic agent is also fed through the antistatic inlet proximate to the catalyst inlet (12) after a predetermined bed weight is reached in the fluidized bed reactor (1; 101); in particular, the antistatic agent feed is increased when a level in the fluidized bed reactor starts to increase.

9. The process of any one of claims 1 to 8, wherein an antistatic agent is introduced in the fluidized bed reactor (1; 101) through one or more inlets; the inert gas is fed through the inlets before the antistatic agent.

10. The process of any one of claims 1 to 9, wherein the pressure is gradually increased to a predetermined set point after feeding the catalyst into the fluidized bed reactor (1; 101).

11. The process of any one of claims 1 to 11, wherein the olefin makes up between 2 to 20 mol-% of the gas composition.

12. A method of preparing an olefin polymer comprising homopolymerizing an olefin or copolymerizing the olefin together with one or more other olefins at temperatures of from 20 to 200°C and pressures of from 0.5 to 10 MPa in the presence of a polymerization catalyst, wherein the method comprises a start up phase according to the process of any one of claims 1 to 11.

13. The method according to claim 12, wherein the polymerization is a homopolymerization of ethylene or a copolymerization of ethylene and one or more other olefins selected from the group consisting of 1-butene, 1-hexene and 1-octene.

14. The method according to claim 15, wherein the resulting polyolefin is a high density polyethylene having a density determined according to ISO 1183 at 23°C from 0.945 to 0.970 g/cm³ or a low density polyethylene having a density determined according to ISO 1183 at 23°C from 0.915 to 0.944 g/cm³.

15. The method of any one of claims 11 to 14, wherein a series of reactors is provided, the series of reactors comprising a multizone circulating reactor and the fluidized bed reactor (1; 101) arranged upstream of the multizone circulating reactor (151).
